## Europäisches Patentamt

## European Patent Office

## Office européen des brevets

(19)

(11) Publication number: **0 038 886**
A1

(12)

# EUROPEAN PATENT APPLICATION

(21) Application number: **80301379.6**

(22) Date of filing: **28.04.80**

(51) Int. Cl.³: **G 01 L 5/24**
**B 23 Q 11/04**

(43) Date of publication of application:
**04.11.81** Bulletin **81/44**

(84) Designated Contracting States:
**AT BE CH DE FR GB IT LI LU NL SE**

(71) Applicant: **Machida, Kenji**
**2-12, Miyamoto-cho**
**Itabashi-ku Tokyo(JP)**

(72) Inventor: **Machida, Kenji**
**2-12, Miyamoto-cho**
**Itabashi-ku Tokyo(JP)**

(74) Representative: **Potter, Willoughby Whatnall et al,**
**ERIC POTTER & CLARKSON 14 Oxford Street**
**Nottingham NG1 5BP(GB)**

(54) Critical torque detector.

(57) Critical torque detector. An apparatus for detecting the critical torque imposed on a rotating drill comprises a rotating input member (12,24); an output member (28, 28a, 32) for supporting the drill and which is connected in a flexible driving connection (34) with the rotating input member (12, 24); and detecting means (26,40) for detecting the difference in rotational speed between said input (12,24) and output (28, 28a, 32) members when said drill is subjected to a torque which is greater than the predetermined critical torque. The input and output members are drivingly connected preferably by a coil spring or magnetic forces so as to rotate conjointly whenever a torsional resistance or a torque encountered by a running drill is lower than the predetermined value, but they are not always rigidly connected. Upon a greater torque imposed on the drill occurring, the output member will be permitted to delay in rotation with respect to the input member, and such a difference in rotational speed can be taken out mechanically or electromagnetically as a signal to detect critical torque. A critical torque detector, particularly with regard to thin drills, that can be used for a drill actually performing a drilling operation has been previously unknown in the art.

EP 0 038 886 A1

./...

Fig. 1

1

## "CRITICAL TORQUE DETECTOR"

The present invention relates to an apparatus for detecting a critical twisting moment or a critical torque which can be tolerated by a drill used for drilling operations.

In performing a drilling operation to form a hole or holes in a hard material such as hard metal, it is usual to employ a drill or twist drill having a diameter corresponding to the diameter of the hole to be formed. Where a small hole is to be formed, a thin drill or a drill having a small diameter must be used. When the depth of the hole being formed becomes greater, the drill will be subjected to an increasingly great resistance or twisting moment. If such resistance or twisting moment exceeds a critical torque, i.e. a torque which can be tolerated by a specific drill then it will break down. Since the critical torque depends upon the hardness of workpieces, the sharpness of the drill being used, the diameter and/or the depth of the hole to be formed, it is not worthwhile to predetermine or predict the amount of critical torque for a specific drill in terms of, for example, the depth of holes. It is, however, highly desirable to momentarily detect the torque which a specific drill actually undergoes when performing drilling operations and, upon detecting of it, retracting the drill from the hole being formed. However, particularly with respect to a thin drill or a drill having a small diameter, such a detector as can be used in connection with a drill actually performing a drilling operation has been unknown in the art.

It has now been found that provision of an apparatus with a rotating input member and an output driven member for supporting a drill which is rotated by the rotating input member through a flexible driving connection therebetween enables detection of a critical torque for the drill which is actually running or performing a drilling operation, detection of a critical torque for a specific drill and, upon detection thereof, retraction of the drill from the hole to be formed to avoid failure of the drill, and detection of the twisting moment or the torque which is undergone by a specific drill thereby to determine the sharpness of that drill.

A "flexible driving connection" means a connection which allows the input and the output members to rotate conjointly when the drill in use is subject to a torque which is lower than the predetermined critical torque, but which causes the output member to be delayed in rotation with regard to the input member when the torque which is imposed on the rotating drill reaches or exceeds the predetermined critical torque. Such delay in rotation will be detected by detecting means provided in accordance with the present invention.

Accordingly, the present invention provides an apparatus for detecting the critical torque imposed on a rotating drill which comprises; a rotating input member; an output member for supporting the drill and which is connected in a flexible driving connection with the rotating input member; and detecting means for detecting the difference in rotational speed between said input and output members when said drill is subjected to a torque which is greater than the predetermined critical torque.

The detecting means funtion either mechanically or electromagnetically to indicate the dangerous condition in which the drill when performing a drilling operation is near to breakdown. A signal produced by the detecting means is sent to a control system, e.g., a hydraulic control circuit for controlling the movement of the drill assembly to retract the drill from the drilling site thereby to avoid the possible failure of the drill. After the causes of greater resistance, such as chips in the hole, are removed, the drill is again advanced to the drilling site. Whenever the drill is subject to a torque exceeding the critical torque, it is automatically retracted and then again advanced to finish the hole. Thus, in accordance with the present invention, an extremely thin drill, such as one having a diameter of from 1/10 - 1/2mm, can be used to perform a drilling operation without any risk of breakdown. Also with the present invention the drill can enjoy a longer life than in prior drilling machines. Furthermore, by employing different drills on the same workpiece for testing purposes, it is possible to determine the sharpness of a particular drill. Thus, the sharpest drill of a set will be the one which is most delayed in commencing its retracting cycle.

Heretofore, a number of means have been known to detect the critical torque for a relatively thick drill, e.g., one having a diameter of 10 mm. When such a drill is subject to an exceedingly great torque, an electric motor for driving the drill has imposed thereon an overload which causes electric current flowing therethrough to vary. By detecting such variation in the electric current, it is possible to control the driving system for the drill assembly. However, for thin or extremely thin drills, e.g. having a diameter of 1/10 mm, the variation of electric current flowing through the driving motor is so small that it is virtually impossible to detect it. Thus, the skill of the manual labour using the drill has been the only measure to rely on in order to avoid breakdown of extremely thin drills.

The present invention provides means to automatically detect the critical torque on an extremely thin drill

4

without the need for any skill. For example, using the present invention, it has been noted that a head used in an injection nozzle of a diesel engine can be formed automatically and rapidly with a plurality of extremely small holes having a diameter of 0.14 mm and a depth of 1 mm without any difficulty. Consequently, the diesel engine itself can be compacted to unexpectedly small dimensions. Moreover, the present invention enables the formation of a hole having a diameter of 0.3 mm and a depth of 1 mm or more in the top of a needle for use in medical treatment having a diameter of about 1 mm, which could not be attained by any prior art drilling machine.

The present invention will be further illustrated with reference to the accompanying drawings, in which :-

Figure 1 is a sectional elevational view partly broken away of a first embodiment of the present invention;

Figure 2 is an enlarged partial perspective view showing mating cam surfaces of a spindle and a reaction rod shown in Figure 1;

Figure 3 is an enlarged partial plan view showing the configuration of the rear end of an input sleeve shown in Figure 1;

Figure 4 is a hydraulic circuit for controlling the movement of the drill assembly;

Figure 5 is an electrical circuit used for actuating the hydraulic circuit of Figure 4;

Figure 6 is a variation of the embodiment shown in Figure 1;

Figure 7 is a partial plan view showing a spindle and a sleeve used in the configuration of Figure 6;

Figure 8 is a partial plan view showing a second sleeve and a pin of a reaction rod;

Figure 9 is an elevational view partly in section of a second embodiment of the present invention;

Figure 10 is a sectional view taken along the line X-X of Figure 9;

Figure 11 is an enlarged fragmentary plan view showing an adjusting ring and an annular member used in the configuration of Figure 9;

Figure 12 is a sectional elevational view of a third embodiment of the present invention;

Figure 13 is a sectional view taken along the line XIII-XIII of Figure 12;

Figure 14 is a fragmentary sectional view taken along the line XIV-XIV of Figure 12;

Figures 15(A), 15(B) and 15(C) are plan and end views respectively, of slanted cam surfaces of a plug and a rod shown in Figure 12;

Figures 16(A) and 16(B) are side and plan views of other forms of slanted cam surfaces;

Figure 17 is an elevational view partly in section of a fourth embodiment of the present invention in which magnetic forces are utilized in place of the spring forces used in the previous embodiments;

Figure 18 is a sectional view of a fifth embodiment of the present invention in which changes in electric current are utilized for the detection of the critical torque;

Figure 19 is an enlarged fragmentary sectional view of two magnetic tubes showing the condition in which respective projections are opposed to each other;

Figure 20 is a view similar to Figure 19 but showing the condition in which respective projections are not opposed to each other; and

Figure 21 is an elevational view partly in section of a sixth embodiment of the present invention for electrically measuring and indicating the torque imposed on the drill and also the change in that torque.

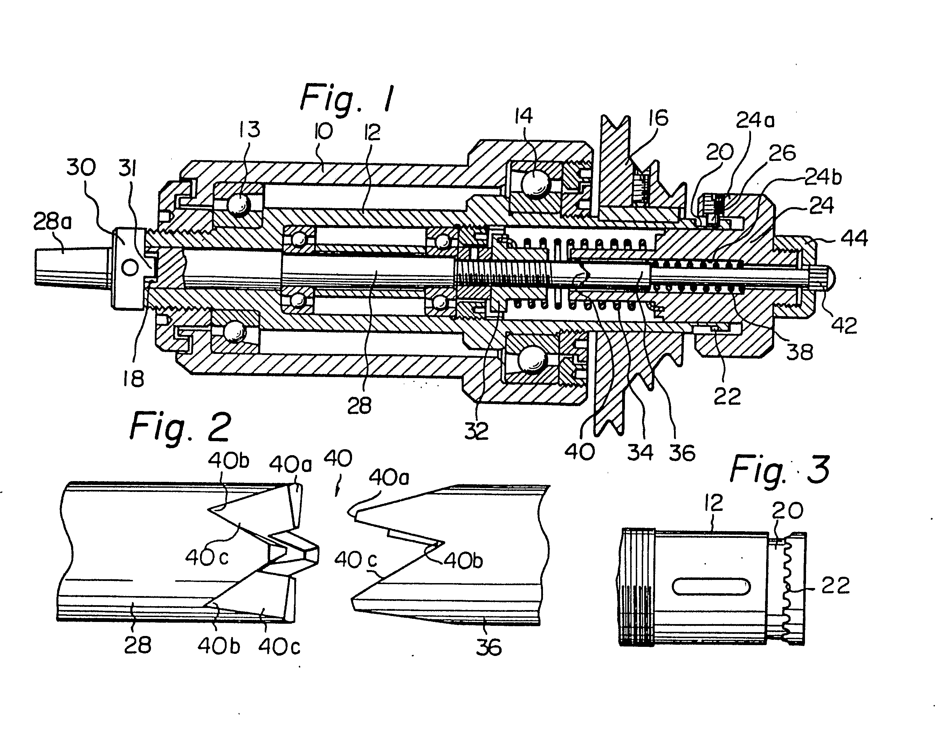

Referring now to the drawings, Figure 1, as aforementioned shows a first embodiment of the present invention. A stationary casing 10 rotatably supports therein an input member or a driving sleeve member 12 by means of bearings 13 and 14. The input or driving sleeve member 12 receives rotating forces through a pulley 16 which is keyed thereon. The sleeve 12 has at its forward end (left hand in Figure 1) two notched portions 18 (only one of which is shown in Figure 1) and at its rear end an annular groove 20. The groove 20 is formed with a plurality of semi-circular pockets 22 on its rear side as shown in detail in Figure 3. In the rear end of the sleeve 12 there is inserted a plug member 24 which has an outer extension 24a surrounding the outer circumference of the rear end of the sleeve 12. The outer extension 24a has at its free end a pin 26 which extends into the annular groove 20 and engages with any one of the pockets 22. The plug member 24 is formed with a central longitudinally extending opening 24b.

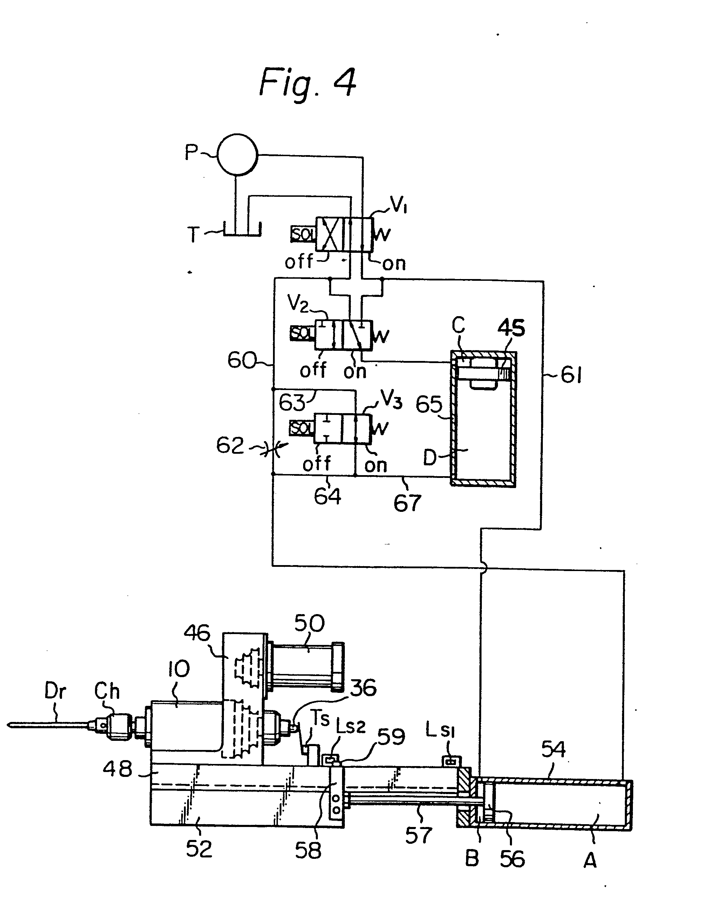

A spindle 28, which is to be called the driven member or output member, is disposed coaxially within the driving sleeve 12 and is supported rotatably by bearings as shown in Figure 1. The spindle 28 has a nose end 28a projecting beyond the forward end of the sleeve 12 where a drill or a twist drill (Dr) is to be attached by means of a drill chuck (Ch) as shown in Figure 4. The drill and chuck may be of any known type. A hollow collar member 30 is fixed around the forward end of the spindle 28 to abut against the forward end of the sleeve 12. Two projections 31 are formed on the rear side of the collar 30, which are loosely fitted within the notched portions 18 so that relative rotary movement is limitedly permitted between the sleeve 12 and the spindle 28.

The spindle 28 has a socket member 32 screwed thereon adjacent the rear end. A coil spring 34 interconnects the socket 32 with the plug member 24 thus forming a "flexible driving connection" between the input member and the output member. The torsional strength of the spring 34 can be varied by changing the position of the pin 26 engaging the pocket 22 as specifically described hereinafter, and is normally preset in accordance with the critical torque expected in connection with a particular drill (Dr).

A reaction rod 36 is disposed in the opening 24b of the plug member 24 and is pressed against the rear end of the spindle 28 by a compression spring 38 so as to be axially movable. The abutting faces 40 of the spindle 28 and the reaction rod 36 are of complementary configurations as shown in Figure 2, each having a plurality of the tops 40a and bottoms 40b. An inclined cam surface 40c extends between each top 40a and bottom 40b. When the drill (Dr) is rotating under resistance which is lower than the preset critical torque, the tops 40a of the spindle 28 engage the bottoms 40b of the reaction rod 36 so that the spindle and the rod are rotated conjointly without any gap therebetween.

Indentations 42 are formed longitudinally around the rear end of the reaction rod 36 and these engage with a complementarily shaped bore of a cap nut 44 screwed on the rear end of the plug member 24. Thus, the reaction rod 36 is permitted to move longitudinally within said bore, but is prevented from rotation therewithin.

By pushing the plug member 24 against the forces of the spring 34 and rotating the plug 24 in any direction, the position of the pin 26 engaging the pocket 22 can be varied thereby allowing the torsional strength of the spring 34 to be adjusted in accordance with the critical torque expected for a particular drill.

In operation a driving force is transmitted from the pulley 16 through the sleeve 12, the pin 26, the plug member 24 and the coil spring 34 to the spindle 28 and also the drill (Dr) to rotate all movable parts

8

conjointly. If the drill (Dr) is subjected to a torque exceeding the preset torque during the drilling operation (which is predetermined by adjusting the torsional strength of the spring 34), the rotation of the spindle 28 is delayed as compared to the driving sleeve 12 and relative rotary movement takes place between the spindle 28 and the sleeve 12. Since the sleeve 12, the plug member 24 and the reaction rod 36 contained therein are adapted to rotate always at the same speed, relative rotary movement also occurs between the spindle 28 and the reaction rod 36 so that the cam surfaces 40$\underline{c}$ of the spindle 28 urge the cam surfaces 40$\underline{c}$ of the reaction rod 36 to move the rod 36 longitudinally and rearwardly. Thus, the reaction rod 36 displaces rearwardly and projects from the bore to indicate that the drill is being subjected to torsional resistance at least equal to or greater than the preset critical torque value.

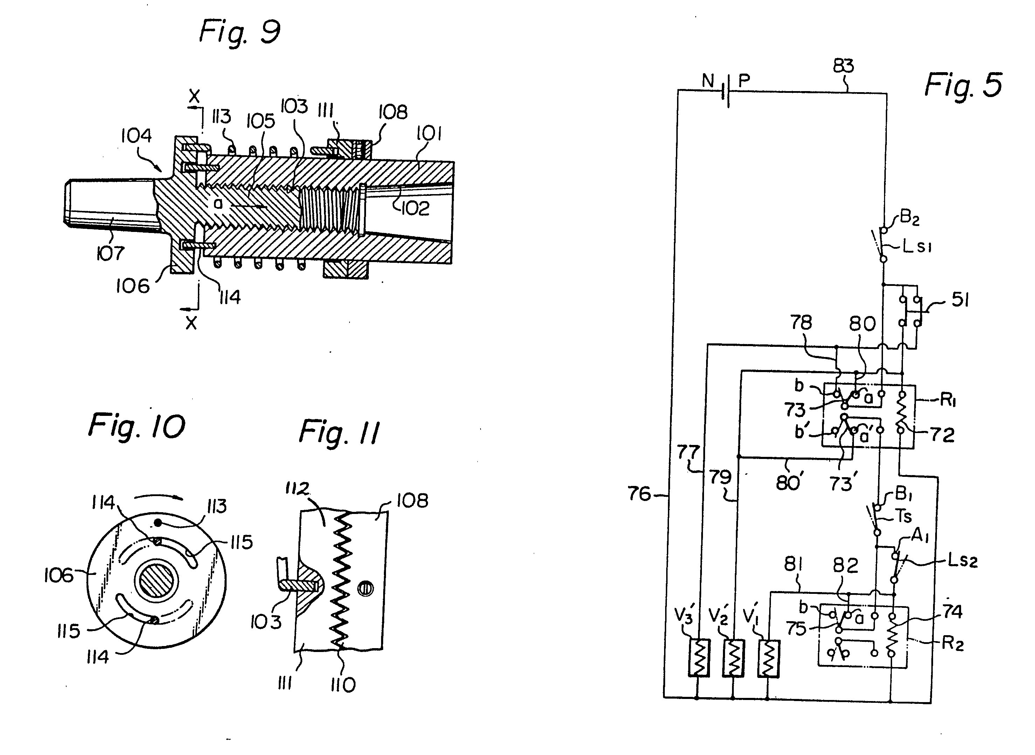

The present invention enables detection of the critical torque or torsional resistance suffered by a drill during its drilling operation as described above and generally also retraction of the drill assembly immediately upon the detection of such critical torque. Figures 4 and 5 illustrate a preferred control system for controlling the movement i.e. advancing and retracting, of the drill (Dr) for the latter purpose.

Referring to Figure 4 the drill assembly, i.e. the casing 10 having the drill (Dr) secured thereto by means of the chuck (Ch), is supported by support means 46 which is fixed to a slider 48. A motor 50 on the support means 46 is for driving the drill (Dr). The slider 48 is adapted to move back and forth on the stationary block 52. On the upper surface of the slider 48, a torque switch (ts), and first and second limit switches (Ls1) and (Ls2) are disposed as shown in Figure 4. A hydraulic cylinder 54 is attached to the rear end of the slider 48, the interior of the hydraulic cylinder 54 being divided into two chambers A and B by a piston 56 having a piston rod 57 fixed to the stationary block 52 by means of an arm 58. A contact member 59 is formed on the arm 58 to actuate limit switches (Ls1) and (Ls2).

In Figure 4, four ports-two positions solenoid valve V1 is provided in the conduits 60 and 61 connecting the pump P and the reservoir T to the chambers A and B of the cylinder 54. A control valve 62 disposed in the conduit 60 is to control the flow of hydraulic fluid. V3 is two ports-two positions solenoid valve having the ports connected selectively through branches 63 and 64 to the conduit 60. A cylinder 65 has chambers C and D divided by a free piston 45, the chamber D being connected through a conduit 67 to the branch 64.

The torque switch (Ts) is positioned adjacent the rear end of the reaction rod 36 and a normally closed contact B1 as shown in Figure 5. When the drill is subjected to the critical torque and the reaction rod 36 is caused to retract as described hereinabove, contact B1 is opened as shown in dotted line in Figure 5.

The first limit switch (Ls1) has a normally closed contact B2 as shown in Figure 5 which, at the end of an advancing stroke of the slider 48, is opened by the contact member 59 as shown in dotted line in Figure 5. The second limit switch (Ls2) has a normally open contact A1 (Figure 5), which at the end of a retracting stroke, is closed by the contact member 59.

Figure 5 illustrates the electrical circuit controlling the solenoids V1', V2' and V3' of the above mentioned solenoid valves V1, V2 and V3, respectively. R1 is a relay having a magnetic coil 72, contacts a and b, and armatures 73 and 73'. R2 is another relay. When the start button switch 71 is pushed and the electric current passes through the coil 72, the armature 73 is attracted to the contact a. When the electric

10

current passes through a magnetic coil 74, the armature 75 is attracted to the contact a. One terminal of the solenoid V3' of the solenoid valve V3 is connected through the conductor 77 to one side of start switch 71. A conductor 78 branched from the conductor 77 is connected to the contact b of the relay Rl.

One terminal of the solenoid V2' of the solenoid valve V2 is connected to the conductor 76, and another terminal is connected to one contact of the start switch 71 through the conductor 79, of which branched conductors 80 and 80' are connected to the contacts a and a' of the relay Rl.

One terminal of the solenoid Vl' of the solenoid valve Vl is connected to the conductor 76, and another terminal is connected through the conductor 81 to the coil, energizing the conductor of the relay R2. The conductor 81 is also connected through the branched conductor 82 to the contact a of the relay R2.

A conductor 83 connected to the positive side P of the power source is connected through the limit switch (Lsl), start switch 71 and coil 72 of the relay Rl to the negative side N of the power source. A conductor parallel to the start switch 71 connects the limit switch (Lsl) with the armature 73 of the relay Rl, and the other armature 73' of the relay Rl is connected through the torque switch (Ts) to the armature 75 of the relay R2, on one hand, and through the second limit switch (Ls2) and coil 74 of the relay R2 to the negative side N of the power source, on the other hand.

The operation of the present control system will now be described with reference to Figures 4 and 5. Figure 4 illustrates a condition in which the hydraulic cylinder 54 is in the rearmost position with regard to the piston 56 and the second limit switch (Ls2) is closed by the contact member 59 on the arm 58. In this condition, when the start switch 71 is pushed and closed as shown in Figure 5, the relay R1 and the relay R2 are energized to form a self-holding circuit as the contacts of the first limit switch (Ls1), the torques switch (Ts) and the second limit switch (Ls2) are closed, so that the solenoids V1', V2' and V3' are energized to turn on the irrespective solenoid valves. Consequently, the hydraulic fluid is directed from the pump P though the valve V1 and the conduit 61 to the chamber B of the cylinder 54 while the hydraulic fluid in the chamber A flows out through the valve V3 and the control valve 62, and then through the solenoid valve V1 into the reservoir T, thereby advancing the cylinder 54 and the slider 48. The hydraulic fluid flowing out of the chamber A goes through the passage in the solenoid valve V3 which has a far greater area than that of the control valve 62 so that the cylinder 54 and the drill assembly attached thereto are advanced with high speed. Since the chamber C of the hydraulic cylinder 65 is connected through the valves V2 and V1 to the reservoir, a portion of the fluid flowing out of the chamber A seeks to enter the chamber D of the cylinder 65, but the amount of that portion can be neglected so far as the chamber D is filled with the fluid.

When the drill (Dr) comes close to the workpiece, the push button switch 71 is released and opened to turn off the valve V3. Thus, the fluid in the chamber A flows out only through the control valve 62 which has a narrow passage so that the speed of the advancing drill (Dr) is reduced to a level at which the drilling operation is performed.

As described previously, when the drill (Dr) is subjected to critical torque during the drilling operation, the reaction rod 36 projects rearwardly from the plug member 24 to turn off the torque switch (Ts), and the relay R2 is de-energized by the solenoid V1'. At this moment, the solenoid valve V2 is in ON condition and the solenoid valve V3 is in OFF condition. Thus, the hydraulic fluid flows through the solenoid valve V1, the conduit 60 and the control valve 62 into the chamber A, while a portion of the fluid flows through the valve V2 into the chamber C of the cylinder 65, to cause the free piston 66 to go down thereby to push out the fluid in the chamber D through the conduit 67 into the chamber A of the cylinder 54. Therefore, the cylinder 54 is rapidly retracted.

When the slider 48 reaches the rearmost position, the limit switch (Ls2) attached thereon is engaged by the contact member 59 fixed on the arm 58 to close its contact Al (as shown by the solid line in Figure 5). Then, the relay R2 is energized to switch the armature 75 to the contact a thereby to energize the solenoid V1' of the valve V1. Now, the fluid is directed from the pump P through the valve V1 and the conduit 61 into the chamber B, while from the chamber A there is discharged the fluid amounting to that portion which was previously discharged from the cylinder 65 to flow back into the chamber D, thus re-advancing the slider 48 and the drill assembly to that position where the drill (Dr) was previously subjected to the critical torque. In this respect, the cylinder 65 functions as a memorizer.

When the spindle 28 reaches the extreme position in the forward direction by the movement of the slider 48, the limit switch (Ls1) is engaged by the contact member 59 of the arm 58 to be off, and self-holding circuit of the relays R1 and R2 are elapsed, and the solenoids V1' and V2', are de-energized to turn off the valves V1 and V2, respectively. At this moment, the valve V3 is OFF. The hydraulic fluid flows through the valve V1, the conduit 60, the control valve 62 into the chamber A, and,

13

on the other hand, the fluid in the chamber B flows out through the conduit 61, and the valve V1 to the reservoir T so as to retract the cylinder 54. At the beginning of retracting movement, the limit switch comes back to ON, and electric current passes through the armature 73, the contact b of the relay R1 and the conductors 78 and 77 to the solenoid V3 to energize the same, thereby to turn on the valve V3. The hydraulic fluid flows through this valve V3 into the chamber A so as to cause the cylinder 54 and the drill assembly to go back with high velocity. On the other hand, a portion of the fluid flows through the conduit 67 into the chamber D to push up the free piston 61. At this moment, the valves V2 and V1 are in the OFF position, and the chamber C is communicated with the reservoir T.

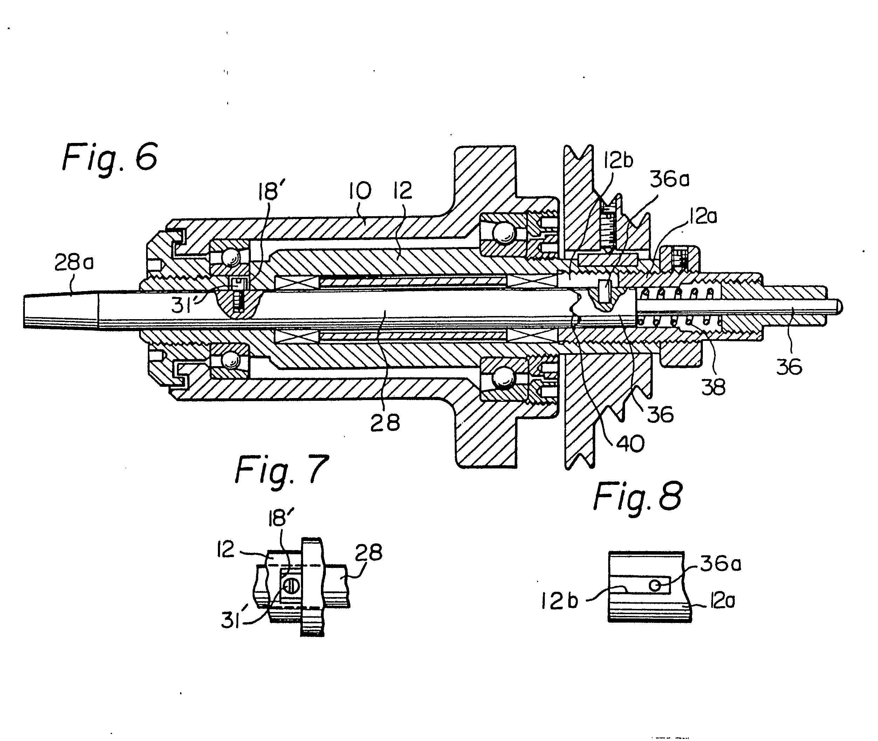

Referring now to Figures 6 to 8, a varied form of the apparatus shown in Figures 1 to 3 is illustrated. Within the stationary casing 10 there is rotatably disposed a first sleeve 12, and a second or inner sleeve 12a is inserted and screwed into the inside of the rear end of the first sleeve 12. A longitudinal slot 12b is formed in the seocnd sleeve 12a. Within the second sleeve 12a, there is disposed a reaction rod 36 having a pin 36a fixed thereon which pin projects into the slot 12b. Thus, the reaction rod 36 can be rotated from and moved longitudinally within the second sleeve 12a. A compression spring 38 urges the reaction rod 36 toward the mating surface 40 of the spindle 28 which supports the drill at its forward end. The first sleeve 12 is provided with a circumferential slot 18' adjacent its forward end in place of the notched portions 18 shown in Figure 1, and the spindle 28 is provided with a pin 31' projecting in the slot 18' instead of the projections 31 shown in Figure 1. The input rotating member of this varied form comprises the first sleeve 12, the second or inner sleeve 12a, and the reaction rod 36 having the pin 36a thereon.

The reaction rod functions also as a detecting means.

Although the spring 38 is utilized in the apparatus shown in Figure 6, other means can be utilized in order to thrust the reaction rod 36 upon the mating surface 40 of the spindle 28. For example, in cases where the apparatus of Figure 6 is employed in a vertical disposition with the nose end 28a down, weight means (not shown) can be mounted on the upper end of the reaction rod 36. Specifically, a saucer or a plate may be attached to the upper end of the reaction rod 36, and a weight piece or pieces may be put on this saucer or plate to vary the force pushing the drill against the workpiece. The adjusting of the weight can be done even if the drill is rotating and performing a drilling operation. By adding incrementally increasing weight pieces, the critical torque that the drill can tolerate may be determined during a drilling operation.

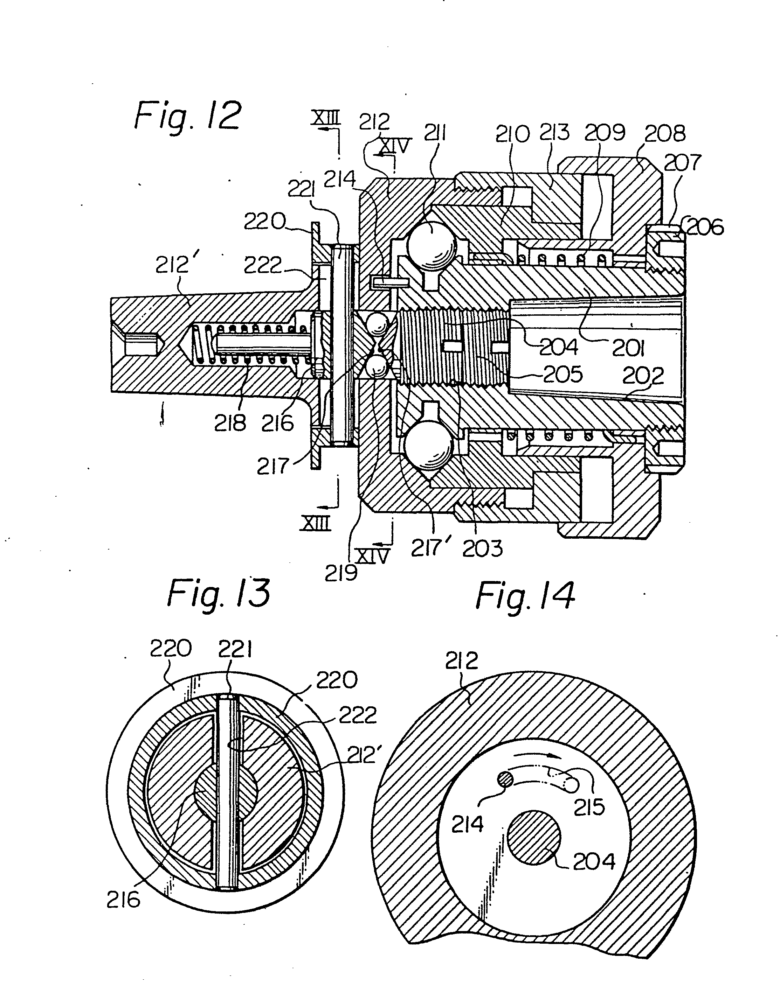

Figures 9 to 11 show a second embodiment of the torque detector of the present invention. An input or rotating tubular member 101 has a tapered bore 102 and a threaded bore 103. The tapered bore 102 is adapted to receive a rotating motor shaft (not shown) and is supported therby, so that the stationary casing for supporting the rotating member 101 is not necessary in this embodiment. An output member generally designated 104 comprises a threaded portion 105 screwed into a portion of the threaded bore 103, a flanged portion 106 formed integrally with the threaded portion 105 which also functions as detecting means, and a tapered nose end portion 107 for mounting a drill chuck (not shown). An annular member 108 is secured to the outer circumference of the input member 101, for example by a screw, and is formed with saw teeth configurations 110 at its forward side face as can been seen from Figure 11. An adjusting ring 111 is loosely fitted around the input member 101 and

engages with the annular member 108 at its rear side
face 112 which is configured complementarily with the
saw teeth configurations 110 of the member 108. A coil
spring 113 connects the adjusting ring 111 with the flange
106 of the output member 104, thus forming the "flexible
driving connection" between the input and output members.
The torsional strength of the spring 113 is adjusted
to a value that is likely to correspond to the critical
torque expected for a particular drill to be tested.
Adjustment of the torsional strength of the spring 113 is
accomplished by pushing the ring 111 against the spring
113, and rotating the same in any direction.

Pins 114 are fixed on the forward end surface of the
input member 101 and project therefrom into circular
grooves 115 formed on the rear surface of the flange 106
thus permitting limitedly relative movement between the
input and output members. When the drill is subject to
a torque which is lower than the predetermined critical
torque, the pins 114 are positioned at one end of the
grooves 115 as shown by the solid lines in Figure 10.

In operation, the rotating force is transmitted from
the input member 101 through the annular member 108,
the adjusting ring 111 and the coil spring 113 to the output member 104. In the course of a drilling operation,
if the drill is subjected to a torque greater than the
predetermined value (which is determined by the torsional
strength preset for the spring 114), the output member 104
will be shifted to a position indicated by the phantom
lines in Figure 10. The resultant delay in rotation
causes the threaded portion 105 to move in the direction
of the arrow a shown in Figure 9 (assuming that the input
member is rotating in a clockwise direction as viewed
from the right hand side of the drawings and thread is
of right hand screw). Thus, upon occurrance of a torque
greater than the predetermined critical torque, the output

16

member 104 is caused to shift in the longitudinal direction, and this longitudinal movement can be taken out as from the flange 106 and a microswitch (not shown) positioned adjacent to the flange as a signal to the control system of Figure 4.

A third embodiment of the torque detector of the present invention is illustrated in Figures 12 to 16. An input tubular member 201 has a tapered bore 202 and a threaded bore 203 formed coaxially therewithin. Into the tapered bore 202, a rotating motor shaft (not shown) for driving and supporting the input member 201 is inserted. A plug member 204 is screwed into the threaded bore 203 and is fixed in place by a stop member 205. The plug member 204 is formed with sloped cam surfaces 217' at its forward end as described in detail hereinafter. A connecting ring 206 is threadedly fixed around the rear end of the input member 201 and has teeth around its outer circumference. An adjusting cap member 208 is loosely fitted over the input member 201 and engages at its rear end with the connecting ring 206 by means of teeth formed complementarily with the teeth of the ring 206. The cap member 208 is connected to an intermediate sleeve 210 by a coil spring 209 to form the flexible driving connection between them. The cap 208 can be pushed against the spring 209 and rotated in any direction to change the torsional strength of the spring 209 so as to predetermine the expected critical torque with which the drill to be loaded. The intermediate sleeve 210 has a tapered forward end.

An output member 212 having a cup-like shape is disposed around the forward ends of the input member 201 and the intermediate sleeve 210, and is connected to a connector ring 213 fixed to the sleeve 210. The output cup member 212 is provided with a tapered portion on its inside in opposite relation with the tapered end of the sleeve 210, thus forming a V-shaped groove therebetween to accommodate a plurality of balls 211 for bearing purposes. The output cup member 212 has an integral tapered portion 212' projecting forwardly for mounting a drill chuck (not shown). The cup member 212 and its mounting portion 212' have a central bore formed coaxially with the bores of the input member 201. A pin 214 projects from the forward end surface of the input member 201 into a circular slot 215 formed on the interior wall of the cup member 212 to permit limited relative rotation between the input and output members.

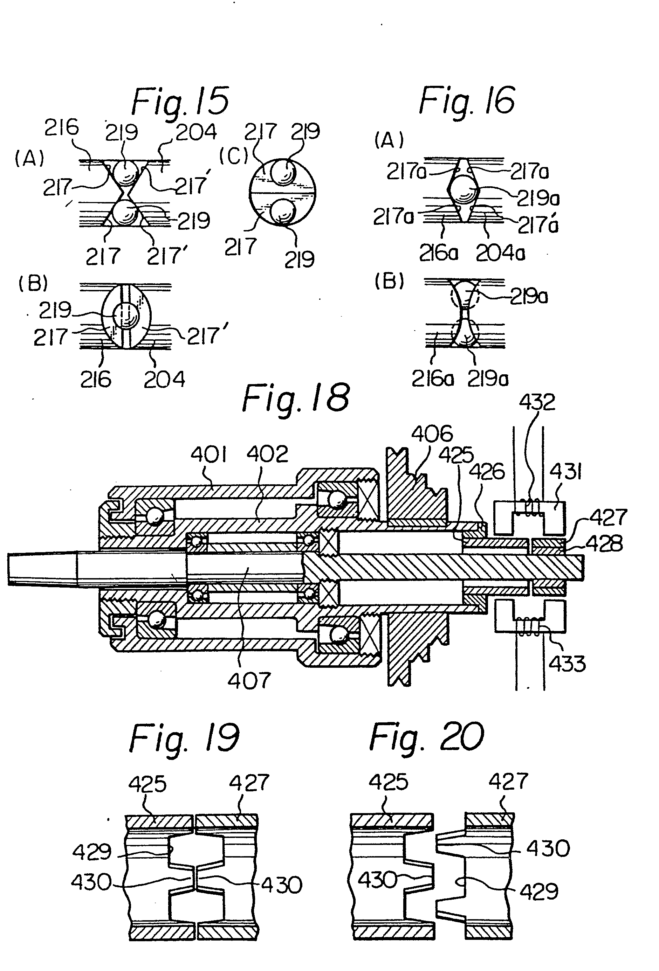

A rod member 216 is disposed within the central bore of the output member 212 and its projection 212', coaxially with the plug member 204, and has sloped cam surfaces 217 in opposite relation to the sloped cam surfaces 217' of the plug 204 to accommodate balls 219 between them. A spring 218 pushes the rod member 216 toward the plug 204 to make the distance between them as short as possible. The sloped or slanted cam surfaces 217 and 217' may be configured as shown in detail in Figure 15, while other configurations such as that shown in Figure 16 may also be utilized. In any case, if relative rotation occurs between the two shaft members, the balls included therebetween cause either of the two shaft members to move longitudinally.

Loosely fitted over the root portion of the mounting member 212' is a detecting collar member 220 which is connected to the rod member 216 by a connecting pin 221 passing transversely through the rod 216 and secured to the collar member 220 at each end thereof. The connecting pin 221 is accommodated within a radial slot 222 formed in the root portion of the member 212'. The width of the slot 222 in a plane transverse to the axis of the member 212' is substantially equal to the diameter of the pin 221, and the width of the same in a plane parallel to the said axis is greater than the diameter of the pin 221. Consequently, the detector collar 220 can move only in the longitudinal direction and not in the rotational direction.

In operation, rotation is transmitted from the input member 201, through the ring 206, the cap 208, the coil spring 209, the intermediate sleeve 210 and the connector 213 to the output member 212 to rotate the drill mounted on the tapered portion 212' for performing the drilling operation. When the drill is subject to a twisting resistance exceeding the value predetermined by the adjustment of the spring 209, the output member 212 including the rod member 216 is delayed in rotation as compared to the input member 201 including the plug 204. Consequently, the cam surfaces 217 are angularly displaced with respect to the cam surfaces 217' and this causes the rod member 216 to be shifted longitudinally along with the detector collar 220. The displacement of the collar 220 can be sensed by a microswitch (not shown) positioned adjacent thereto, the microswitch producing a signal to actuate the control circuit for retracting the drill assembly to avoid failure of the drill.

Figure 17 shows a fourth embodiment of the present invention in which forces of repulsion between two magnets are utilized in place of the spring forces used in the previously described embodiment. A sleeve 302 is rotated by an input rotating force from a pulley 306. In the interior of the rear portion of the sleeve 302 there is fixed a transmitting block 315a in annular form by a pin 316. The block 315a surrounds the mating surfaces 310 of a spindle 307 and a reaction rod 321. A key way 315b is formed longitudinally on the interior surface of the block 315a. A transmitting pin 315c projects transversely from the reaction rod 321, and projected ends of the pin 315c are received in the key way 315b so as to be able to slide longitudinally. A magnet support 321b made of insulating material is inserted at its inner end in the rear end of the reaction rod 321, and supports at its outer end a permanent magnet 322a. In opposite relation to this magnet 322a, an electromagnet 322b is disposed. The same poles of the respective magnet are faced side-by-side as shown, so that repelling forces occur therebetween. The repelling forces can be varied by changing the electric current passing through the electromagnet 322b.

In operation, the spindle 307 and the drill mounted thereon are rotated from pulley 306, through the block 315a, the pin 315c, the reaction rod 321 and the mating surfaces 310. When the drill encounters resistance in the drilling operation exceeding the preset critical torque, the drill and the spindle are cuased to be delayed in rotation, so that the reaction rod 321 is pushed rearwardly through the co-relationship of the mating surfaces 310 in the same manner as described in connection with Figure 1. A torque switch (Ts) is located adjacent the flanged portion 321' of reaction rod 321 and this is contacted by the retracting flanged portion 321' to actuate the control circuit for discontinuing the drilling operation.

In this particular embodiment, the force of repulsion against the magnet 322a can be varied by changing the electric current passing through the electromagnet 322b. The greater the force of repulsion, the greater the twisting moment that the drill is subjected to. Because the changing of electric current can be carried out even during a drilling operation, the critical torque can be detected "dynamically" by increasing the electric current more and more, whereas in the previously described embodiment the detection of the critical torque can only be done "statistically" or in a batch wise manner.

20

Figure 18 shows a fifth embodiment of the present invention. A non-rotating casing 401 rotatably supports a rotating sleeve 402 which has a pulley 406 keyed thereon, and a spindle 407 rotatably supported therein. In the rear end of the sleeve 402, a tube of magnetic material 425 is attached by means of an insulator 426 and the tube 425 surrounds the spindle 407 with a small clearance. A further magnetic tube 427 is disposed coaxially with and in an end-to-end relationship with the magnetic tube 425. The second magnetic tube 427 is fixed on the rear end of the spindle 407 by means of an insulator 428. Adjacent ends of the respective tubes 425 and 427 are provided with notches 429 and projections 430 as shown in Figure 19. A U-shaped core 431 having two poles is arranged near to the respective magnetic tubes with one pole adjacent the tube 425 and other pole adjacent the tube 427. The core 431 will be magnetized by the electric current flowing through a coil 432 wound thereon. 433 is a coil for detecting variations in lines of magnetic forces flowing through the opposed ends of the tubes 425 and 427.

When the core 431 is magnetized, lines of magnetic force flow between two poles of the core 431, exerting forces on the adjacent ends of the tube 425 and the tube 427 thereby causing the magnetic path through the adjacent ends to be shortest, so that the tubes 425 and 427 are arranged with the respective projections 430 opposed to each other as shown in Figure 19. In this condition, the spindle 407 is rotated from the rotating sleeve 402 through a connection magnetically produced flexible driving between the tubes 425 and 427. The strength or intensity of the magnetic forces exerted on the tubes 425 and 427 is determined by the electric current flowing through the coil 432 and it may be changed in accordance with the critical torque expected for a specific drill which is to be mounted on the spindle 407.

When the drill is subjected to torsional resistance greater than the predetermined critical torque during its drilling operation, the spindle 407 will be delayed in rotation with respect to the input sleeve 402 so that relative displacement between the tubes 425 and 427 will occur as shown in Figure 20. Thus, the lines of magnetic forces flowing through the ends of the tubes 425 and 427 are influenced and momentarily varied to induce voltage variations in the coil 433 which, as detected by any known means, functions as a signal to actuate the control system for retracting the drill assembly.

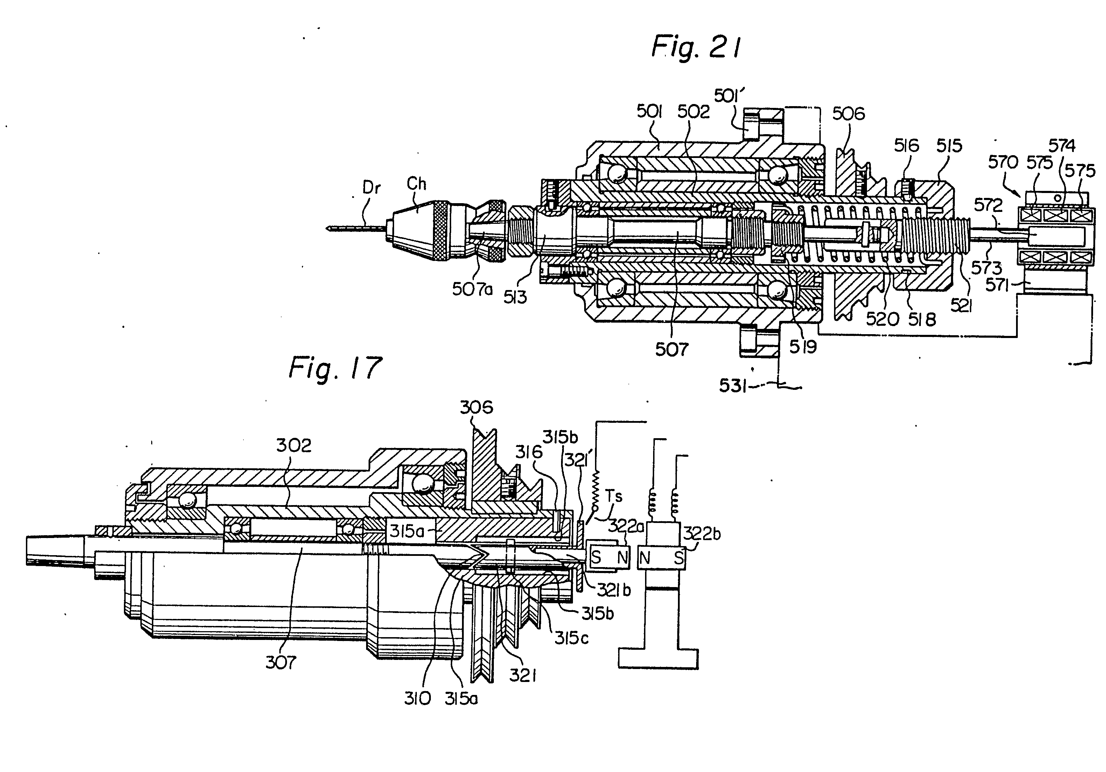

Finally, a sixth embodiment of the present invention will now be described in connection with Figure 21. A cylindrical casing 501 is attached to a support 531 (which is comparable to the slider 48 shown in Figure 4) by a suitable fastening means 501'. Within the casing a rotatable input sleeve 502 having a pulley 506 keyed thereon is supported. A spindle 507 is rotatably supported within the rotating sleeve 502 and has a tapered nose end 507a on which is mounted a chuck (Ch) having a drill (Dr). The spindle 507 is formed with a collar 513 adjacent its nose end having a circumferential slot into which a pin projecting from the sleeve 502 is loosely received so as to permit limited relative displacement between the sleeve and the spindle. A cap member 515 having an axial bore is adjustably fixed on the rear end of the rotatable sleeve 502 by a set screw 516 which can be selectively engaged with any one of holes 518 formed on the sleeve 502. A socket member 519 is attached to the rear end of the spindle 507 and is connected to the cap member 515 by a coil spring 520 to form a flexible driving connection therebetween. The torsional strength of the spring 520 can be changed by rotating the cap member 515 in any direction after loosening the set screw 516. The strength of the spring 520 is to be set in accordance with the critical torque expected for a particular drill to be tested. A threaded rod 521 is screwed into the axial bore of the cap member 515, which can rotate conjointly with the spindle 507 and move longitudinally through the axial threaded bore of the cap member 515.

A differential transformer 570 is supported in the rear of the threaded rod 521 by a fixture 571 on the slider 531. A core of high permeability 572 of the transformer 570 is connected by an insulated rod 573 to the reaction rod 521. The core 572 is inserted into a primary winding 574 and secondary windings 575. The difference between electromotive force created by alternating voltage impressed on the primary winding 574 and electromotive force induced in the secondary windings 575 can be taken out as a secondary voltage by any suitable means. The value of the secondary voltage will be changed linearly with the axial movement of the core 572 through the windings.

In the drilling operation, when the torsional resistance exerted on the drill becomes greater than the critical torque preset by the adjusted strength of the spring 520, the rotation of the spindle 507 and the rod 521 is delayed with respect to the input sleeve 502 and the cap member 515, so that relative rotation will occur between the rod 521 and the cap 515 to cause the rod 521 to proceed rearwardly through the threads formed thereon. Therefore, the core 572 is displaced longitudinally through the windings 574 and 575 thereby changing the value of the secondary voltage. The value and the change of the secondary voltage can be electrically taken out and registered for momentarily detecting the critical torque imposed on the working drill.

While a few embodiments of the invention have been illustrated and described in detail, it should be understood that the invention is not limited thereto or thereby.

CLAIMS.

1. An apparatus for detecting the critical torque imposed on a rotating drill which comprises:

A rotating input member;

an output member for supporting the drill and which is connected in a flexible driving connection with the rotating input member; and

detecting means for detecting the difference in rotational speed between said input and output members when said drill is subjected to a torque which is greater than the predetermined critical torque.

2. An apparatus as claimed in Claim 1 characterised in that the rotating input member comprises:

a rotating sleeve having a pulley keyed thereon,

a plug member inserted in said sleeve and connected thereto by a pin selectively engaging with said sleeve, and

a coil spring connecting said sleeve with said output member; in that the output member comprises:

a spindle for supporting a drill at its forward end, the spindle having a socket member fixed thereon and being connected by said spring with said rotating sleeve, and having cam surfaces at its rear end, and in that the detecting means comprises:

a reaction rod which is disposed within said plug member so as to be movable longitudinally with and rotatable conjointly with said plug member, and is urged toward said output spindle to engage with said cam surfaces of said spindle, and

switch means located adjacent one end of said reaction rod so as to be contacted by said reaction rod when moved longitudinally.

3. An apparatus as claimed in Claim 1 characterised in that the rotating input member comprises:

a first rotating sleeve having a pulley keyed thereon,

a second rotating sleeve attached within said first sleeve and having a longitudinal slot formed therealong, and

A reaction rod which is slidably accommodated within said second sleeve and which has a pin projecting into said longitudinal slot of said second sleeve.

4. An apparatus as claimed in Claim 1 characterised in that the input member comprises:

a rotating tubular member having therein a tapered bore and a threaded bore,

an annular member fixed around said tubular member,

an adjusting ring loosely fitted around said tubular member and engaged with said annular member through saw teeth configurations formed on the opposed side faces of said annular member and said adjusting ring, respectively, and

a coil spring connecting said adjusting ring with the output member;  in that the output member comprises:

a flange disposed outside of said tubular member to permit limited relative rotation therebetween and which is connected by said coil spring with said adjusting ring, said flange acting also as detecting means, and

a tapered nose end portion formed integrally with said flange for mounting a drill;

and in that the detecting means comprises:

a threaded rod formed integrally with said flange on the opposite side to said nose end and which is screwed into a portion of said threaded bore of said tubular member so as to be movable longitudinally upon occurrance occurring of a difference in rotational speed between said input and output members,

said flange, and

switch means located adjacent said flange so as to be connected by said flange.

5. An apparatus as claimed in Claim 1 characterised in that the input member comprises:

a rotating tubular member having therein a tapered bore and a plug member fixed coaxially with said bore,

a cap member adjustably mounted on said tubular member, and

a coil spring connecting said cap member in flexible driving connection with the output member;

. in that the output member comprises:

an intermediate sleeve fitted over said tubular member and connected by said coil spring with said cap member, and

a cup shaped member secured to said intermediate sleeve and surrounding the forward end of said tubular member to permit limited relative rotation therebetween, said cup shaped member having an integral tapered portion projecting forwardly for mounting a drill, and

a central bore formed within said cup shaped member and said integral tapered portion coaxially with said plug member, and in that the detecting means comprises:

a rod member slidably disposed longitudinally within said central bore of said cup shaped member and said tapered portion and having sloped cam surfaces in opposite relation to sloped cam surfaces of said plug member,

balls disposed between opposite cam surfaces of said rod and plug members, respectively,

a collar member fitted around said integral tapered portion so as to be limitedly movable in the longitudinal direction with said rod member, and

switch means located adjacent said collar member and connected to an electrical circuit for controlling the movement of the drill.

6. An apparatus as claimed in Claim 1 characterised in that the input member comprises:

a rotating sleeve having a pulley keyed thereon,

an annular block disposed within said rotating sleeve and connected thereto by a pin, said block having a key way formed in the interior thereof,

a reaction rod, also functioning as detecting means, inserted in said annular block and having at the forward end thereof slanted cam surfaces, and

a set consisting of a magnet and an electromagnet disposed adjacent to the rear end of said reaction rod and producing magnetic repelling forces to push forwardly said reaction rod, in that the output member comprises:

a spindle rotatably supported within said rotating sleeve for mounting a drill at its forward end and having slanted cam surfaces at its rear end which are complementary with said cam surfaces of said reaction rod, and in that the detecting means comprises:

said reaction rod,

a flange formed at the rear end of the reaction rod, and

switch means located adjacent said flange to actuate a control circuit for drill movement.

7. An apparatus as claimed in Claim 1 characterised in that the input member comprises:

a rotating sleeve having a pulley keyed thereon,

a first tube of magnetic material fixed to the rear end of said rotating sleeve,

a second tube of magnetic material disposed coaxially and in an end-to-end relationship with said first magnetic tube and fixed to the output member, and a first electromagnetic core producing a magnetic field located adjacent said magnetic tubes,

said magnetic tubes being formed at their opposed ends with projections, in that the output member comprises:

a spindle rotatably supported within said sleeve for mounting a drill at its forward end and which is fixed at its rear end to said second magnetic tube, and in that the detecting means comprises:

a second electromagnetic core and a coil wound thereearound,

induced voltage produced in said coil being changed upon occurrance of a difference in rotational speed of said input and output members.

8.  An apparatus as claimed in Claim 1 characterised in that the input member comprises:

a rotating sleeve having a pulley fixed thereon,

a  cap member adjustably engaged with the rear end of said rotating sleeve and having an axial threaded bore, and

a coil spring connecting said cap in a flexible driving connection with the output member,  in that the output member comprises:

a spindle for mounting a drill which spindle is driven through said coil spring and is permitted to perform limited relative rotation with respect to said rotating sleeve, and in that the detecting means comprises:

a threaded rod associated with said spindle in such manner as to be rotated conjointly therewith and slidably screwed into said axial threaded bore, and

a differential transformer having a core of high permeability connected to said threaded rod, and a primary and secondary windings arranged around said core to produce varied secondary voltage as a signal when a difference in rotational speed between the input member and the output member occurs.

Fig. 3

Fig. 2

Fig. 1

1/7

0038886

# Fig. 4

Fig. 5

Fig. 9

Fig. 10

Fig. 11

*Fig. 6*

*Fig. 7*

*Fig. 8*

_Fig. 12_

_Fig. 13_

_Fig. 14_

## Fig.15

(A) 216  219  204
217        217'
217  217'  219

(C) 217  219
217  219

(B) 219
217        217'
216  204

## Fig.16

(A)
217a        217a
            219a
217a        217'
216a  204a

(B)
            219a
216a  219a

## Fig.18

401  402  406  425  426  432  431
427
428
407  433

## Fig.19

425        427
429
430        430

## Fig.20

425        427
430
430        429

## Fig. 21

## Fig. 17

# European Patent Office

## EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 4 193 720 (M. KENJI) <br> * In total * <br><br> -- <br><br> US - A - 3 989 405 (R.C. QUACKEN-BUSH) <br> * Abstract; figures * <br><br> ---- | 1-8 | G 01 L  5/24 <br> B 23 Q .11/04 |

TECHNICAL FIELDS
SEARCHED (Int. Cl.³)

G 01 L  5/24
B 23 Q  11/04

CATEGORY OF
CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search <br> The Hague | Date of completion of the search <br> 14-01-1981 | Examiner <br> VAN ASSCHE | |

EPO Form 1503.1  06.78